# EUROPEAN PATENT SPECIFICATION

(11) **EP 2 523 314 B1**
(45) Date of publication and mention of the grant of the patent: **25.03.2020**
(21) Application number: 12166243.1
(22) Date of filing: 30.04.2012
(51) Int. Cl.: H02K 9/197

(54) **Enhanced dual liquid cooling system for electric motor**
Verbessertes Zweiflüssigkeitenkühlsystem für einen elektrischen Motor
Système de refroidissement liquide double amélioré pour moteur électrique

(30) Priority: 12.05.2011 US 201113105982
(43) Date of publication of application: 14.11.2012
(73) Proprietor: Hamilton Sundstrand Corporation, Windsor Locks, CT 06096-1010 (US)
(72) Inventor: Pal, Debabrata, Hoffman Estates, IL Illinois 60195 (US)
(74) Representative: Dehns

(56) References cited:
- EP-A2- 0 543 280
- WO-A1-03/084029
- US-A1- 2006 163 954
- US-B1- 6 762 520

## Description

### BACKGROUND

This disclosure generally relates to a liquid cooled electric motor. More particularly, this disclosure relates to an electric motor including different cooling mediums for cooling different parts of the electric motor.

A liquid cooled electric motor or machine includes a cooling medium that flows within a gap between the stator and rotor. The cooling medium is typically electrically conductive and therefore, the cooling medium is separated from the stator by a sleeve disposed about the rotor. Heat from the stator winding is conducted from the stator through the sleeve and finally to the cooling medium within the sleeve and surrounding the rotor. A thermally conductive compound is provided between the sleeve and the stator to aid in thermal conduction from the stator to the sleeve. Gaps or voids in the thermally conductive compound reduce thermal conduction of heat generated by the stator to the cooling medium contained within the sleeve.

EP-A-0543280 discloses an electric motor whose stator space is water-cooled.

US-A-2006/163954 discloses an electric motor where the stator comprises an autonomous cooling circuit.

### SUMMARY

According to a first aspect of the present invention, there is provided an electric machine comprising: a stator defining an inner cavity; a rotor rotatable about an axis within the inner cavity, the rotor separated from the stator by an annular gap; a sleeve disposed about the rotor and within the annular gap, the sleeve defining a first sealed chamber including the rotor; a first cooling medium disposed within the first sealed chamber; and a second cooling medium disposed outside of the first sealed chamber and about the stator, wherein an interface between the stator and the sleeve comprises a press fit and any voids between the sleeve and stator are filled with the second cooling medium.

According to a second aspect of the present invention, there is provided a method of installing an electric motor comprising the steps of: mounting a stator and rotor within a sealed housing, with the stator and rotor separated by an annular gap; providing a sleeve disposed about the rotor and within the annular gap; defining, by the sleeve, a first sealed chamber within which is disposed the rotor; filling the first sealed chamber with a first cooling medium; defining a second sealed chamber about the first sealed chamber containing the stator; filling the second sealed chamber with a second cooling medium comprising at least one of a solid and a liquid; and mounting the sealed housing to a structure and engaging a driven member of the electric motor with a desired device, wherein the stator is mounted to the sleeve by a press fit and any voids between the sleeve and stator are filled with the second cooling medium.

A disclosed electric machine includes a rotor within a cavity defined within a stator. A liquid coolant is utilized to cool the stator and rotor. The example liquid coolant is flowed through a gap defined between the stator and the rotor. The example liquid coolant is electrically conductive and constrained to interact with only one of either the stator or the rotor.

Thermal energy produced during operation of the electric machine is conducted through the sleeve disposed within the gap between the stator and the rotor into the liquid coolant. In examples that are not within the scope of the present invention, the sleeve is placed in thermal contact with the stator through a thermally conductive adhesive. In some instances voids that lack the thermally conductive material are present. A second coolant is provided that is contained within a second cavity disposed annularly about the first cavity. The second liquid coolant is of a different composition than the first liquid coolant. Heat produced by the stator creates a natural convective flow within the second coolant contained in the second cavity. Thermal energy is therefore transferred away from the gap by way of the first coolant flowing through the gap and against the sleeve and by natural convection of the second liquid coolant within the second cavity. The additional mechanism for transferring heat enhances electric machine operation and provides increased operational capacities.

These and other features disclosed herein can be best understood from the following specification and drawings, the following of which is a brief description.

### BRIEF DESCRIPTION OF THE DRAWINGS

Figure 1 is a cross sectional view of an example electric machine driving a pump.
Figure 2 is a perspective view of an interface between an example stator and sleeve.
Figure 3 is a schematic representation of the interface between the sleeve and the stator.
Figure 4 is a schematic view of another portion of the interface between the stator and sleeve.
Figure 5 is an enlarged cross sectional view of a portion of the electric machine.

### DETAILED DESCRIPTION

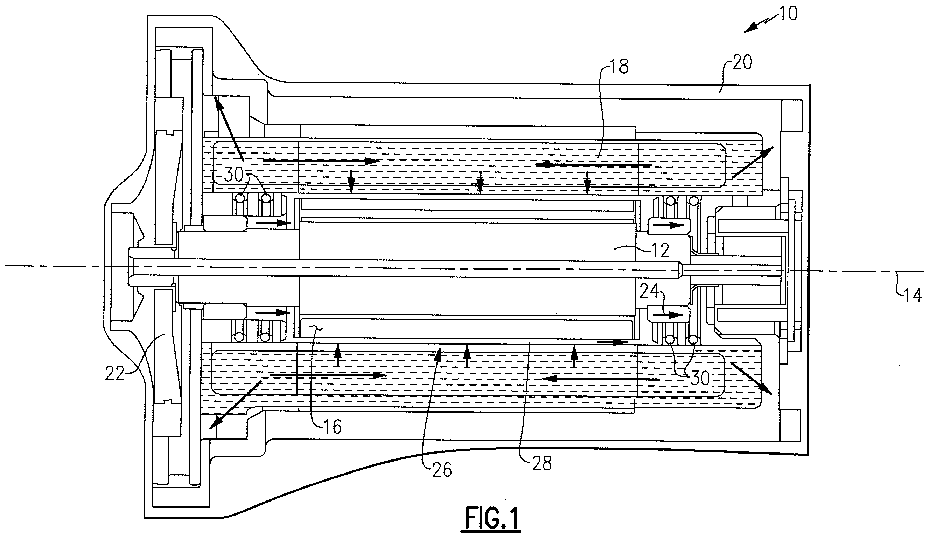

Referring to Figure 1, an electric machine 10 includes a rotor 12 that rotates about an axis 14 within a cavity defined within a stator 18. The rotor 12 and stator 18 are supported within a housing 20. The example housing 20 also supports a pump 22 that is driven by rotation of the rotor 12. A liquid coolant 24 is utilized to cool the stator 18 and rotor 12. The example liquid coolant 24 is flowed through a gap 26 defined between the stator 18 and the rotor 12. The example liquid coolant 24 is electrically conductive and therefore must be separated and constrained to interact with only one of either the stator 18 or the rotor 12. In this example the liquid coolant 24 comprises approximately 60% water and 40% propylene glycol by volume. However, other liquid coolants as are known are also within the contemplation of this invention. Moreover, although the example electric machine 10 is a motor driving a pump 22, other electric machines such as a generator or electric motor driving another device would also benefit from this disclosure.

The liquid coolant 24 is contained within a cavity 16 defined about the rotor 12. A sleeve 28 is disposed within the gap 26 between the stator 18 and the rotor 12 to contain the electrically conductive coolant about the rotor 12 assembly.

Thermal energy produced during operation of the electric machine 10 is conducted through the sleeve 28 disposed within the gap 26 between the stator 18 and the rotor 12 into the liquid coolant 24. The liquid coolant 24 flows about the rotor 12 and is constrained within the first cavity 16 defined by the sleeve 28. The sleeve 28 is sealed by o-rings 30 that are disposed on each end of the rotor 12. Because the liquid coolant 24 is constrained about the rotor 12, heat generated by the stator 18 must pass through the gap 26 and the sleeve 28 before reaching the liquid coolant 24.

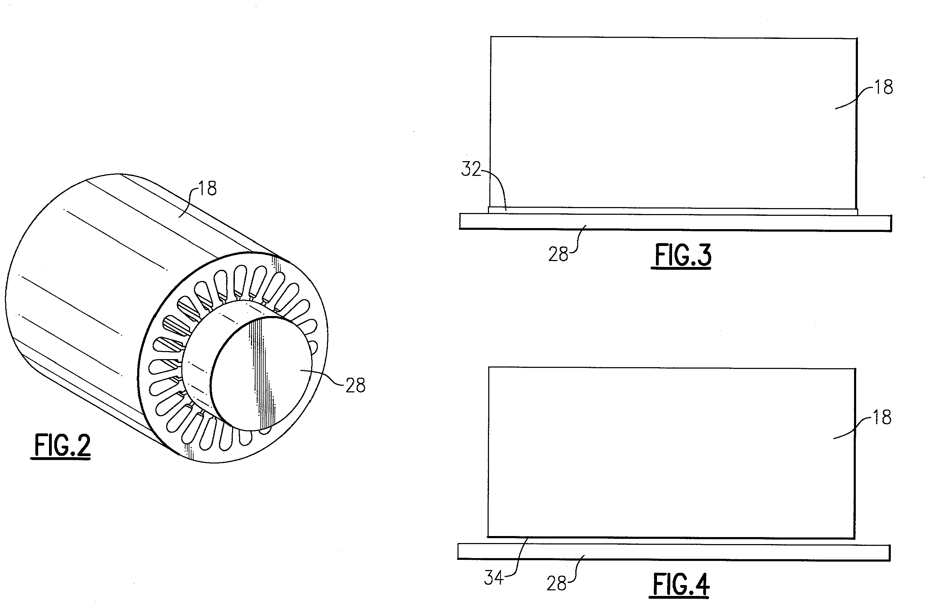

Referring to Figure 2, the sleeve 28 is placed in thermal contact with the stator 18 through a thermally conductive adhesive 32. This thermally conductive adhesive 32 provides the thermal path between the stator 18 and the sleeve 28. In this example, the thermally conductive adhesive 32 is an impregnation compound RHAD; however, other thermally conductive compounds as are known are also within the contemplation of this disclosure.

Referring to Figures 3 and 4 with continued reference to Figure 2, the sleeve 28 is in thermal contact with the stator 18 through the thermally conductive material 32. In some instances thermally conductive material 32 is not evenly or consistently spread along the entire axial and annular length of the interface between the stator 18 and the sleeve 28. As is shown in Figure 4, in some instances voids 34 that lack the thermally conductive material 32 are present. The voids 34 that do not include thermally conductive material 32 define an air gap between the stator 18 and the sleeve 28. This air gap is thermally inefficient and therefore does not conduct the thermal energy and heat generated by the stator 18 as efficiently as the thermally conductive material 32 between and into the sleeve 28 and finally into the liquid coolant 24 within the first cavity 16 defined within the sleeve 28. This results in overheated stator windings, thus reducing reliability of the electric machine.

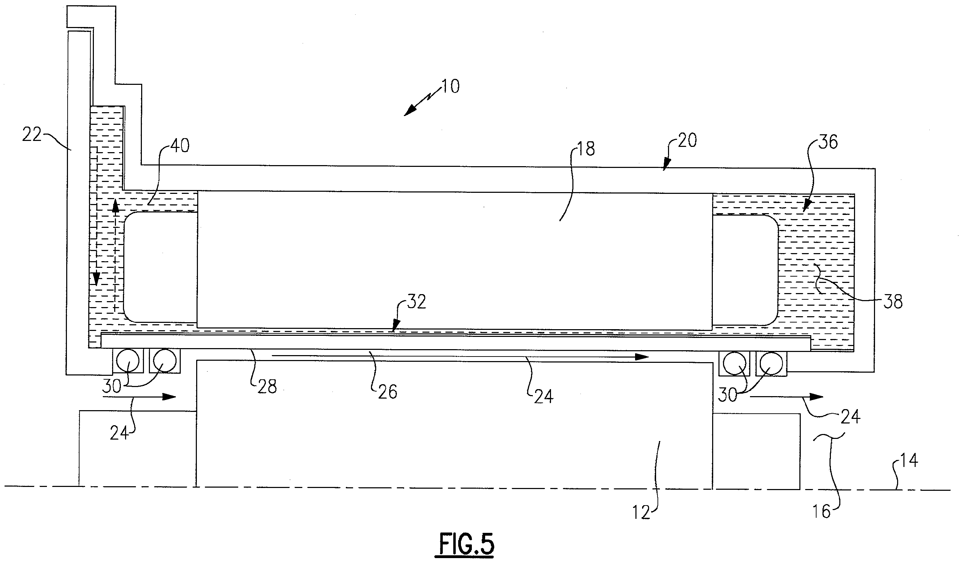

Referring to Figure 5, the example electric machine 10 includes a second coolant 38 contained within a second cavity 36 disposed annularly about the first cavity 16. The second liquid coolant 38 is of a different composition than the first liquid coolant 24. The second cavity 36 is defined by the sleeve 28. However the second cavity 36 is defined about an outer surface of the sleeve 28 in contrast to the first cavity 16 that is defined within an interior space of the sleeve 28. The first and second coolants 24, 38 are separated by the cavities 16, 36 defined by the sleeve 28.

The second coolant 38 is a dielectric material such as PAO or MIL-L-23699 oil and provides a thermally conductive interface between the stator 18 and the sleeve 28 in the voids 34. Voids 34 between the stator 18 and sleeve 28 are filled by the second coolant 38 and therefore, air gaps are no longer present between the sleeve 28 and stator 18 and heat may more efficiently transfer between the stator 18 and the sleeve 28. In addition, this method allows for elimination of the RHAD compound application process needed between the stator sleeve 28 and stator 18. The stator sleeve 28 can then be inserted by a press-fit (interference fit) within the stator assembly, thus reducing the cost of manufacturing.

Heat produced by the stator 18 creates a natural convective flow, shown schematically by arrows 40, within the second coolant 38 within the second cavity 36. The second coolant 38 flows outwardly from the hottest areas adjacent the sleeve 28 toward the outer portion of the housing 20. As the second coolant 38 cools, it flows back toward the interface between the sleeve 28 and stator 18. The natural convective flow 40 of the second liquid coolant 38 enhances thermal conduction and cooling of the electric machine 10.

In another example, the second coolant 38 is a solid-liquid phase change material (PCM) such as organic paraffin. The PCM is selected to have a melting point corresponding with operational temperatures of the electric machine 10. As the electric machine 10 approaches the selected melting point, the PCM in solid form will melt and fill any voids 34. As the electric machine 10 returns to normal operational temperatures, the PCM returns to solid form. The PCM will remain in solid form during operation of the electric machine 10 in normal temperature ranges.

Accordingly, thermal energy is transferred away from the gap 26 by way of the first coolant 24 flowing through the gap 26 and against the sleeve 28 and by natural convection of the second liquid coolant 38 within the second cavity 36. The additional mechanism for transferring heat enhances electric machine operation and provides increased operational capacities.

Although an example embodiment has been disclosed, a worker of ordinary skill in this art would recognize that certain modifications would come within the scope of this disclosure. For that reason, the following claims should be studied to determine the scope and content of this invention.

## Claims

1. An electric machine (10) comprising:
a stator (18) defining an inner cavity;
a rotor (12) rotatable about an axis within the inner cavity, the rotor separated from the stator by an annular gap (26);
a sleeve (28) disposed about the rotor and within the annular gap, the sleeve defining a first sealed chamber (16) including the rotor;
a first cooling medium (24) disposed within the first sealed chamber; and
a second cooling medium (38) disposed outside of the first sealed chamber and about the stator,
wherein an interface between the stator (18) and the sleeve (28) comprises a press fit and any voids between the sleeve and stator are filled with the second cooling medium (38).

2. The electric machine as recited in claim 1, wherein the first cooling medium (24) comprises a thermally and electrically conductive liquid.

3. The electric machine as recited in claim 1 or 2, wherein the second cooling medium (38) comprises a dielectric cooling medium.

4. The electric machine as recited in claim 3, wherein the dielectric cooling medium (38) comprises a liquid, or wherein the second cooling medium (38) comprises a solid-liquid phase change material.

5. The electric machine as recited in any preceding claim, wherein the stator (18) and rotor (12) are mounted within a housing (20) that defines a portion of a second sealed chamber (36) disposed about the first sealed chamber (16).

6. The electric machine as recited in claim 5, wherein the second sealed chamber (36) is disposed annularly about the first sealed chamber (16).

7. A pump assembly comprising:
a pump (22) supported within a housing (20); and
an electric machine (10) as recited in any preceding claim to drive the pump and being supported within a common housing.

8. A method of installing an electric motor (10) comprising the steps of:
mounting a stator (18) and rotor (12) within a sealed housing (20), with the stator and rotor separated by an annular gap (26);
providing a sleeve (28) disposed about the rotor within the annular gap (26);
defining, by the sleeve (28), a first sealed chamber (16) within which is disposed the rotor (12);
filling the first sealed chamber (16) with a first cooling medium (24);
defining a second sealed chamber (36) about the first sealed chamber containing the stator (18);
filling the second sealed chamber with a second cooling medium (38) comprising at least one of a solid and a liquid; and
mounting the sealed housing to a structure and engaging a driven member of the electric motor with a desired device,
wherein the sleeve is inserted by a press fit within the stator and any voids between the sleeve and stator are filled with the second cooling medium.

9. The method as recited in claim 8, wherein the second cooling medium (38) comprises a dielectric material.

## Patentansprüche

1. Elektrische Maschine (10), Folgendes umfassend:
einen Stator (18), der einen inneren Hohlraum definiert;
einen Rotor (12), der drehbar um eine Achse in dem inneren Hohlraum ist, wobei der Rotor von dem Stator durch eine ringförmige Lücke (26) getrennt ist;
eine Hülse (28), die um den Rotor und in der ringförmigen Lücke angeordnet ist, wobei die Hülse eine erste abgedichtete Kammer (16) definiert, die den Rotor beinhaltet;
ein erstes Kühlmittel (24), das in der ersten abgedichteten Kammer angeordnet ist; und
ein zweites Kühlmittel (38), das außerhalb der ersten abgedichteten Kammer und um den Stator angeordnet ist,
wobei eine Verbindung zwischen dem Stator (18) und der Hülse (28) eine Presspassung umfasst und alle Zwischenräume zwischen der Hülse und dem Stator mit dem zweiten Kühlmittel (38) gefüllt sind.

2. Elektrische Maschine nach Anspruch 1, wobei das erste Kühlmittel (24) eine thermisch und elektrisch leitfähige Flüssigkeit umfasst.

3. Elektrische Maschine nach Anspruch 1 oder 2, wobei das zweite Kühlmedium (38) ein dielektrisches Kühlmittel umfasst.

4. Elektrische Maschine nach Anspruch 3, wobei das dielektrische Kühlmedium (38) eine Flüssigkeit umfasst, oder wobei das zweite Kühlmedium (38) ein fest-flüssiges Phasenwechselmaterial umfasst.

5. Elektrische Maschine nach einem der vorstehenden Ansprüche, wobei der Stator (18) und der Rotor (12) in einem Gehäuse (20) angebracht sind, das einen Abschnitt einer zweiten abgedichteten Kammer (36) definiert, die um die erste abgedichtete Kammer (16) angeordnet ist.

6. Elektrische Maschine nach Anspruch 5, wobei die zweite abgedichtete Kammer (36) ringförmig um die erste abgedichtete Kammer (16) angeordnet ist.

7. Pumpenbaugruppe, Folgendes umfassend:
eine Pumpe (22), die in einem Gehäuse (20) getragen wird; und
eine elektrische Maschine (10) nach einem der vorstehenden Ansprüche, um die Pumpe anzutreiben, und wobei die elektrische Maschine in einem gemeinsamen Gehäuse getragen wird.

8. Verfahren zum Installieren eines elektrischen Motors (10), wobei das Verfahren die folgenden Schritte umfasst:
Befestigen eines Stators (18) und eines Rotors (12) in einem abgedichteten Gehäuse (20), wobei der Stator und der Rotor durch eine ringförmige Lücke (26) getrennt sind;
Bereitstellen einer Hülse (28), die in der ringförmigen Lücke (26) um den Rotor angeordnet ist;
Definieren einer ersten abgedichteten Kammer (16), in der der Rotor (12) angeordnet ist, durch die Hülse (28);
Füllen der ersten abgedichteten Kammer (16) mit einem ersten Kühlmittel (24);
Definieren einer zweiten abgedichteten Kammer (36) um die erste abgedichtete Kammer, die den Stator (18) enthält;
Füllen der zweiten abgedichteten Kammer mit einem zweiten Kühlmittel (38), das mindestens eines von einem Feststoff und einer Flüssigkeit umfasst; und
Befestigen des abgedichteten Gehäuses an einer Struktur und in Eingriff nehmen eines angetriebenen Teils des elektrischen Motors mit einer gewünschten Vorrichtung,
wobei die Hülse durch eine Presspassung in den Stator eingefügt wird und alle Zwischenräume zwischen der Hülse und dem Stator mit dem zweiten Kühlmittel gefüllt sind.

9. Verfahren nach Anspruch 8, wobei das zweite Kühlmittel (38) ein dielektrisches Material umfasst.

## Revendications

1. Machine électrique (10) comprenant :
un stator (18) définissant une cavité interne ;
un rotor (12) pouvant tourner autour d'un axe à l'intérieur de la cavité interne, le rotor étant séparé du stator par un espace annulaire (26) ;
un manchon (28) disposé autour du rotor et à l'intérieur de l'espace annulaire, le manchon définissant une première chambre étanche (16) comportant le rotor ;
un premier fluide de refroidissement (24) disposé à l'intérieur de la première chambre étanche, et
un second fluide de refroidissement (38) disposé à l'extérieur de la première chambre étanche et autour du stator,
dans laquelle une interface entre le stator (18) et le manchon (28) comprend un ajustement serré et tous les vides entre le manchon et le stator sont remplis du second fluide de refroidissement (38) .

2. Machine électrique selon la revendication 1, dans laquelle le premier fluide de refroidissement (24) comprend un liquide thermiquement et électriquement conducteur.

3. Machine électrique selon la revendication 1 ou 2, dans laquelle le second fluide de refroidissement (38) comprend un fluide de refroidissement diélectrique.

4. Machine électrique selon la revendication 3, dans laquelle le fluide de refroidissement diélectrique (38) comprend un liquide, ou dans laquelle le second fluide de refroidissement (38) comprend un matériau à changement de phase solide-liquide.

5. Machine électrique selon une quelconque revendication précédente, dans laquelle le stator (18) et le rotor (12) sont montés à l'intérieur d'un boîtier (20) qui définit une partie d'une seconde chambre étanche (36) disposée autour de la première chambre étanche (16).

6. Machine électrique selon la revendication 5, dans laquelle la seconde chambre étanche (36) est disposée de manière annulaire autour de la première chambre étanche (16).

7. Ensemble pompe comprenant :
une pompe (22) supportée à l'intérieur d'un boîtier (20) ; et
une machine électrique (10) selon une quelconque revendication précédente pour entraîner la pompe et étant supportée à l'intérieur d'un boîtier commun.

8. Procédé d'installation d'un moteur électrique (10) comprenant les étapes :
de montage d'un stator (18) et d'un rotor (12) à l'intérieur d'un boîtier étanche (20), le stator et le rotor étant séparés par un espace annulaire (26) ;
de fourniture d'un manchon (28) disposé autour du rotor à l'intérieur de l'espace annulaire (26) ;
de définition, par le manchon (28), d'une première chambre étanche (16) à l'intérieur de laquelle est disposé le rotor (12) ;
de remplissage de la première chambre étanche (16) avec un premier fluide de refroidissement (24) ;
de définition d'une seconde chambre étanche (36) autour de la première chambre étanche contenant le stator (18) ;
de remplissage de la seconde chambre avec un second fluide de refroidissement (38) comprenant au moins l'un d'un solide et d'un liquide ; et
de montage du boîtier étanche sur une structure et de mise en prise d'un élément entraîné du moteur électrique avec un dispositif souhaité,
dans lequel le manchon est inséré par un ajustement serré à l'intérieur du stator et tous les vides entre le manchon et le stator sont remplis du second fluide de refroidissement.

9. Procédé selon la revendication 8, dans lequel le second fluide de refroidissement (38) comprend un matériau diélectrique.
